(19) Europäisches Patentamt
European Patent Office
Office européen des brevets

(11) **EP 3 022 611 B1**

(12) **EUROPÄISCHE PATENTSCHRIFT**

(45) Veröffentlichungstag und Bekanntmachung des Hinweises auf die Patenterteilung:
**10.07.2019   Patentblatt 2019/28**

(21) Anmeldenummer: **14752581.0**

(22) Anmeldetag: **05.08.2014**

(51) Int Cl.:
*G05B 23/02* (2006.01)      *F02C 9/00* (2006.01)
*G05B 13/04* (2006.01)      *G06N 3/00* (2006.01)
*G06N 3/04* (2006.01)      *G06N 3/08* (2006.01)
*G06N 20/00* (2019.01)      *G05B 13/02* (2006.01)

(86) Internationale Anmeldenummer:
**PCT/EP2014/066810**

(87) Internationale Veröffentlichungsnummer:
**WO 2015/043806 (02.04.2015 Gazette 2015/13)**

(54) **VERFAHREN ZUR RECHNERGESTÜTZTEN STEUERUNG UND/ODER REGELUNG EINES TECHNISCHEN SYSTEMS**

METHOD FOR THE COMPUTER-AIDED CONTROL AND/OR REGULATION OF A TECHNICAL SYSTEM

PROCÉDÉ DE COMMANDE ET/OU DE RÉGULATION ASSISTÉE(S) PAR ORDINATEUR D'UN SYSTÈME TECHNIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2013   DE 102013219307**

(43) Veröffentlichungstag der Anmeldung:
**25.05.2016   Patentblatt 2016/21**

(73) Patentinhaber: **Siemens Aktiengesellschaft**
**80333 München (DE)**

(72) Erfinder:
• **HEIN, Daniel**
**80337München (DE)**
• **HENTSCHEL, Alexander**
**81929 München (DE)**
• **DÜLL, Siegmund**
**80336 München (DE)**
• **RUNKLER, Thomas**
**81929 München (DE)**
• **UDLUFT, Steffen**
**82223 Eichenau (DE)**

(56) Entgegenhaltungen:
WO-A2-2010/004587      DE-A1-102010 011 221
US-A1- 2011 257 800      US-A1- 2012 010 757

**Beschreibung**

Die Erfindung betrifft ein Verfahren zur rechnergestützten Steuerung und/oder Regelung eines technischen Systems, insbesondere eine Energieerzeugungsanlage.

Bei der Steuerung bzw. Regelung von technischen Systemen ist es oftmals wünschenswert, den Betrieb des technischen Systems über die Durchführung von entsprechenden Aktionen derart zu beeinflussen, dass das Verhalten des technischen Systems in Bezug auf bestimmte Kriterien optimiert ist. Beispielsweise ist es bei dem Betrieb einer Gasturbine sinnvoll, die durch die Turbine erzeugten Abgasemissionen zu reduzieren bzw. die Verbrennungsdynamik der Brennkammer der Gasturbine (auch als Brennkammerbrummen bezeichnet) möglichst gering zu halten. Dabei kann z.B. auf Parameter betreffend die Zuführung von Gas und Luft zur Brennkammer der Gasturbine Einfluss genommen werden.

Aus dem Stand der Technik sind rechnergestützte Verfahren bekannt, mit denen eine Aktionsauswahlregel bestimmt wird, wonach für entsprechende aufeinander folgende Zustände des technischen Systems, welche durch geeignete Zustandsvariablen des Systems charakterisiert sind, Aktionen ermittelt werden, welche im Hinblick auf ein Optimierungskriterium, wie z.B. die oben erwähnte geringe Schadstoffemission bzw. ein geringes Brennkammerbrummen, optimal sind. In den Dokumenten [1] und [2] wird die Bestimmung einer Aktionsauswahlregel basierend auf dem Lernen eines rekurrenten neuronalen Netzes mit Trainingsdaten aus bekannten Zuständen und Aktionen beschrieben. Gemäß der Aktionsauswahlregel wird eine Aktionssequenz für einen aktuellen Zustand des technischen Systems unter Berücksichtigung von vergangenen Zuständen in Abhängigkeit von einem Optimierungskriterium ausgegeben.

Die bekannten Verfahren zur Bestimmung einer Aktionsauswahlregel mittels rekurrenten neuronalen Netzen weisen den Nachteil auf, dass beim Lernen des rekurrenten neuronalen Netzes das Optimierungskriterium in der Form eines Gütemaßes mit einfließt. Demzufolge kann im Realbetrieb des technischen Systems nicht ohne weiteres auf ein sich veränderndes Optimierungskriterium reagiert werden, da hierzu das neuronale Netz komplett neu gelernt werden müsste.

Aufgabe der Erfindung ist es deshalb, ein Verfahren zur rechnergestützten Steuerung und/oder Regelung eines technischen Systems zu schaffen, welches auf einfache Weise am technischen System durchzuführende Aktionen gemäß einem Optimierungskriterium bestimmt.

Diese Aufgabe wird durch die unabhängigen Patentansprüche gelöst. Weiterbildungen der Erfindung sind in den abhängigen Patentansprüchen definiert.

Das erfindungsgemäße Verfahren dient zur rechnergestützten Steuerung und/oder Regelung eines technischen Systems. Das technische System ist insbesondere eine Energieerzeugungsanlage und in einer besonders bevorzugten Ausführungsform eine Gasturbine, wie weiter unten näher beschrieben ist. Gegebenenfalls kann das technische System jedoch auch eine Energieerzeugungsanlage in der Form einer regenerativen Energieerzeugungsanlage, wie z.B. eine Windturbine, sein. Das dynamische Verhalten des technischen Systems wird im erfindungsgemäßen Verfahren für mehrere Zeitpunkte jeweils durch einen Zustand des technischen Systems und eine in diesem Zustand am technischen System durchgeführte Aktion charakterisiert, wobei eine jeweilige Aktion zu einem jeweiligen Zeitpunkt in einen neuen Zustand des technischen Systems zum nächsten Zeitpunkt führt. Eine Aktionssequenz stellt dabei eine oder mehrere aufeinander folgend in einer zeitlichen Reihenfolge am technischen System durchzuführende Aktionen dar. Ein Zustand des technischen Systems umfasst eine und vorzugsweise mehrere Zustandsvariablen, welche Betriebszustände des technischen Systems bzw. den Betrieb des technischen Systems beeinflussende Größen sind. Demgegenüber sind Aktionen die Veränderung von einer oder mehreren Aktionsvariablen, wobei die Aktionsvariablen gegebenenfalls auch Zustandsvariablen darstellen können, welche im Rahmen der Regelung bzw. der Steuerung des technischen Systems verändert werden können.

In dem erfindungsgemäßen Verfahren kann für jede Aktionssequenz basierend auf den Zuständen des technischen Systems, welche aus dem Durchführen der Aktionen der Aktionssequenz resultieren, ein Gütemaß in Bezug auf ein Optimierungskriterium für den Betrieb des technischen Systems berechnet werden, wobei das Gütemaß umso höher ist, je besser das Optimierungskriterium erfüllt ist. Der Begriff des Optimierungskriteriums ist dabei weit zu verstehen, und dieses Kriterium kann ggf. mehrere Teil- bzw. Unterkriterien umfassen.

Gemäß Schritt bzw. Merkmal a) des erfindungsgemäßen Verfahrens wird ein Simulationsmodell des technischen Systems bereitgestellt, mit dem für jeweilige Aktionssequenzen die daraus resultierenden Zustände des technischen Systems prädiziert werden können. Solche Simulationsmodelle sind an sich aus dem Stand der Technik bekannt. Das Simulationsmodell kann z.B. ein datengetriebenes Modell sein, welches auf vorab ermittelten Daten des Betriebs des technischen Systems basiert bzw. mit diesen Daten gelernt ist. Ebenso kann das Simulationsmodell ein analytisches Modell und/oder ein physikalisches Modell des technischen Systems sein.

In einer besonders bevorzugten Ausführungsform wird als Simulationsmodell ein datengetriebenes Modell in der Form eines neuronalen Netzes, insbesondere ein rekurrentes neuronales Netz, verwendet. Das neuronale Netz ist dabei basierend auf Trainingsdaten von bekannten Aktionssequenzen mit bekannten daraus resultierenden Zuständen des technischen Systems gelernt. In einer speziellen Ausführungsform wird das in der Druckschrift [3] beschriebene neuronale Netz zur Modellierung des dynamischen Verhaltens eines technischen Systems im Rahmen des erfindungsgemäßen Verfahrens eingesetzt. Anstatt eines neuronalen Netzes kann das datengetriebene Modell gegebenenfalls auch auf Gaußschen Prozessen und/oder auf Regressionsbäumen und/oder auf einer Support Vector Regression beruhen.

In einem Schritt b) des erfindungsgemäßen Verfahrens wird zu einem jeweiligen vorgegebenen Zeitpunkt aus einer Folge von aufeinander folgenden vorgegebenen Zeitpunkten mittels eines numerischen Optimierungsverfahrens eine Aktionssequenz mit einem möglichst hohen Gütemaß ermittelt, wobei das Optimierungsverfahren das bereitgestellte Simulationsmodell verwendet, um für Aktionssequenzen, die im Rahmen des numerischen Optimierungsverfahrens erzeugt werden, die daraus resultierenden Zustände des technischen Systems zu prädizieren und anschließend mit diesen prädizierten Zuständen das Gütemaß der erzeugten Aktionssequenzen zu ermitteln. Unter dem Begriff der erzeugten Aktionssequenzen fallen alle, im Rahmen des numerischen Optimierungsverfahrens verarbeiteten bzw. generierten Aktionssequenzen und nicht ausschließlich die von dem numerischen Optimierungsverfahren ermittelte und schlussendlich ausgegebene Aktionssequenz. Ein numerisches Optimierungsverfahren benötigt im Gegensatz zu anderen Methoden keinen vorab durchgeführten Lernschritt.

In einer besonders bevorzugten Ausführungsform wird als numerisches Optimierungsverfahren ein nicht-konvexes heuristisches Optimierungsverfahren und/oder ein gradientenfreies stochastisches Suchverfahren eingesetzt. Besonders bevorzugt ist das numerische Optimierungsverfahren eine Teilchenschwarmoptimierung (englisch: Particle Swarm Optimization) und/oder ein evolutionärer Algorithmus und/oder ein genetischer Algorithmus und/oder Simulated Annealing. All diese Verfahren sind an sich aus dem Stand der Technik bekannt und werden deshalb nicht näher beschrieben.

In einem Schritt c) des erfindungsgemäßen Verfahrens wird zumindest ein Teil der Aktionen der in Schritt b) ermittelten Aktionssequenz am technischen System durchgeführt. Mit anderen Worten wird die erste Aktion und gegebenenfalls auch weitere darauf folgende Aktionen der ermittelten Aktionssequenz durchgeführt. Im Besonderen kann in Schritt c) nur die erste Aktion durchgeführt werden, wobei unmittelbar anschließend Schritt b) zur Ermittlung einer neuen durchzuführenden Aktion wiederholt wird. Hierdurch wird erreicht, dass die Aktionen sehr gut das verwendete Optimierungskriterium erfüllen.

Das erfindungsgemäße Verfahren zeichnet sich dadurch aus, dass weder das verwendete Simulationsmodell noch das numerische Optimierungsverfahren vorab im Rahmen eines Lernvorgangs das Gütemaß benötigen, wie dies beispielsweise beim Lernen einer Aktionsauswahlregel mittels eines neuronalen Netzes der Fall ist. Demzufolge kann das Verfahren schnell an sich verändernde Bedingungen während des Betriebs des technischen Systems angepasst werden, indem das Gütemaß bzw. dessen Berechnung geeignet verändert wird. Vorzugsweise ist dabei bei der Regelung und/oder Steuerung des technischen Systems eine Benutzerschnittstelle vorgesehen, über welche ein Benutzer das Gütemaß verändern kann. Der Benutzer kann somit on-line während des Betriebs des technischen Systems das Gütemaß variieren. Der Betrieb des technischen Systems muss hierfür nicht unterbrochen werden. Ein Benutzer kann über die Benutzerschnittstelle durch Variation des Gütemaßes die von ihm gewünschten Schwerpunkte im Hinblick auf die Optimalität des Betriebs des technischen Systems einstellen. Im Falle eines technischen Systems in der Form einer Gasturbine kann er z.B. eine Gewichtung zwischen Lebenszeitverbrauch der Turbine und Effizienz vornehmen. In Notsituationen kann es sinnvoll sein, die Turbinen mit erhöhtem Lebenszeitverbrauch zu betreiben, da der Strom signifikant teurer verkauft werden kann und den erhöhten Verschleiß kompensiert.

In einer weiteren, besonders bevorzugten Ausführungsform ist das numerische Optimierungsverfahren eine Teilchenschwarmoptimierung, deren Teilchen jeweiligen Aktionssequenzen zugeordnet sind, welche bei der Initialisierung der Teilchenschwarmoptimierung zufällig bestimmt werden und im Rahmen der Teilchenschwarmoptimierung iterativ mittels jeweiliger Geschwindigkeitsvektoren verändert werden, wobei die jeweiligen Geschwindigkeitsvektoren mittels einer Fitnessfunktion bestimmt werden, welche dem Gütemaß entspricht. Die Teilchenschwarmoptimierung kann somit im erfindungsgemäßen Verfahren auf einfache Weise dadurch realisiert werden, dass die dabei verwendete Fitnessfunktion mit dem Gütemaß gleichgesetzt wird.

In einer weiteren Variante wird im Rahmen der Teilchenschwarmoptimierung bei der Berechnung des Geschwindigkeitsvektors für ein jeweiliges Teilchen eine Anzahl von Nachbarteilchen gemäß einer vorgegebenen Topologie herangezogen. Die Topologie spezifiziert Kanten zwischen den Teilchen, die in diesem Sinne Knoten entsprechen. Dabei sind alle Teilchen, die über eine Kante mit einem jeweiligen Teilchen (direkt) verbunden sind, Nachbarteilchen des jeweiligen Teilchens. Durch die Berücksichtigung von Nachbarteilchen basierend auf einer vorgegebenen Topologie werden mittels der Teilchenschwarmoptimierung in der Regel bessere Lösungen gefunden.

In einer speziellen Variante wird als vorgegebene Topologie eine Ringtopologie verwendet, bei der die Teilchen über Kanten derart verbunden sind, dass die Teilchen mit den Kanten einen Ring bilden. Demzufolge hat jedes Teilchen zumindest zwei Nachbarteilchen auf dem Ring. Optional können für ein jeweiliges Teilchen eine oder mehrere weitere Kanten vorgesehen sein, welche das jeweilige Teilchen mit weiteren Teilchen verbinden, welche nicht über eine Kante des Rings mit dem jeweiligen Teilchen (direkt) verbunden sind.

In einer weiteren bevorzugten Ausführungsform ist die Teilchenschwarmoptimierung derart ausgestaltet, dass ein Maximalwert und ein Minimalwert der Geschwindigkeitskomponenten des Geschwindigkeitsvektors vorgegeben sind, wobei im Falle, dass eine Geschwindigkeitskomponente den Maximalwert überschreitet, diese Geschwindigkeitskomponente auf den Maximalwert gesetzt wird, und wobei im Falle, dass eine Geschwindigkeitskomponente den Minimalwert unterschreitet, diese Geschwindigkeitskomponente auf den Minimalwert gesetzt wird. Vorzugsweise ist dabei der Minimalwert der negative Wert eines positiven Maximalwerts. In der detaillierten Beschreibung wird diese Variante der Teilchenschwarmoptimierung noch näher erläutert.

In einer weiteren Modifikation der Teilchenschwarmoptimierung wird ein jeweiliger Geschwindigkeitsvektor in einem Iterationsschritt unter Verwendung des jeweiligen Geschwindigkeitsvektors des vorhergehenden Iterationsschritts multipliziert mit einem Gewichtungsfaktor ermittelt. Auch diese Modifikation der Teilchenschwarmoptimierung wird in der detaillierten Beschreibung noch näher erläutert.

In einer weiteren Ausführungsform des erfindungsgemäßen Verfahrens stellt das Gütemaß eine (diskontierte) Summe dar, deren Summanden jeweils ein Bewertungsmaß umfassen, das für jeden aus einer Aktion der Aktionssequenz resultierenden Zustand bestimmt wird, wobei das Bewertungsmaß in dem jeweiligen Summanden vorzugsweise mit einem Faktor multipliziert ist, der umso kleiner ist, je weiter der Zustand, für den das Bewertungsmaß bestimmt wird, in der Zukunft liegt. Auf diese Weise werden bei der Bestimmung des Gütemaßes weiter in der Zukunft liegende Zustände immer weniger stark berücksichtigt.

Mit dem erfindungsgemäßen Verfahren wird in einer besonders bevorzugten Variante eine elektrische Energieerzeugungsanlage umfassend eine Gasturbine geregelt bzw. gesteuert. Ein Zustand der Gasturbine umfasst dabei vorzugsweise eine oder mehrere der nachfolgenden Zustandsvariablen, wobei eine Aktion insbesondere eine Veränderung von einer oder mehreren der nachfolgenden Zustandsvariablen betrifft:

- der Verdichterwirkungsgrad der Gasturbine;
- der Turbinenwirkungsgrad der Gasturbine;
- die geregelte Abgastemperatur der Gasturbine;
- die Stellung einer oder mehrerer Leitschaufeln, insbesondere im Verdichter der Gasturbine;
- die Rotationsgeschwindigkeit der Gasturbine;
- eine oder mehrere Drücke und/oder Temperaturen in der Gasturbine, insbesondere die Eintrittstemperatur und/oder der Eintrittsdruck und/oder die Austrittstemperatur und/oder der Austrittsdruck im Verdichter und/oder in der Turbine;
- die Temperatur in der Umgebung, in der die Gasturbine betrieben wird;
- die Luftfeuchtigkeit in der Umgebung, in der die Gasturbine betrieben wird;
- den Luftdruck in der Umgebung, in der die Gasturbine betrieben wird;
- ein oder mehrere Massen- und/oder Volumenströme;
- ein oder mehrere Parameter von einem Kühl- und/oder Hilfssystem und/oder Schmieröl- und/oder Lagersystemen in der Gasturbine, insbesondere die Stellung von einem oder mehreren Ventilen zur Zufuhr von Kühlluft;
- die Leistung der Gasturbine, insbesondere ein prozentualer Leistungswert;
- die Brennstoffgüte der Gasturbine;
- die Schadstoffemission der Gasturbine, insbesondere die Emission von Stickoxiden und/oder Kohlenmonoxid;
- die Temperatur einer oder mehrerer Turbinenschaufeln der Gasturbine;
- die Verbrennungsdynamik der Brennkammer der Gasturbine;
- ein oder mehrere Parameter betreffend die Zuführung von Gas zu der Brennkammer der Gasturbine;
- die Menge an der Gasturbine zugeführtem Gas;
- Lager- und/oder Gehäuseschwingungen in der Gasturbine.

Im Falle einer Gasturbine eignet sich als Optimierungskriterium für den Betrieb des technischen Systems insbesondere eine möglichst geringe Schadstoffemission der Gasturbine und/oder eine möglichst geringe Dynamik der Brennkammer der Gasturbine.

Neben dem oben beschriebenen Verfahren betrifft die Erfindung ferner eine Vorrichtung zur rechnergestützten Steuerung und/oder Regelung eines technischen Systems, insbesondere einer elektrischen Energieerzeugungsanlage, wobei die Vorrichtung eine Rechnereinheit umfasst, mit der das erfindungsgemäße Verfahren bzw. eine oder mehrere Varianten des erfindungsgemäßen Verfahrens durchführbar sind.

Die Erfindung betrifft darüber hinaus ein technisches System, insbesondere eine Energieerzeugungsanlage und vorzugsweise eine Gasturbine, welches die soeben beschriebe Vorrichtung beinhaltet.

Darüber hinaus umfasst die Erfindung ein Computerprogrammprodukt mit einem auf einem maschinenlesbaren Träger gespeicherten Programmcode zur Durchführung des erfindungsgemäßen Steuer- und/oder Regelverfahrens, wenn der Programmcode auf einem Rechner ausgeführt wird.

Ein Ausführungsbeispiel der Erfindung wird nachfolgend anhand der beigefügten Figuren detailliert beschrieben.

Es zeigen:

Fig. 1    eine schematische Darstellung des Ablaufs einer Ausführungsform des erfindungsgemäßen Verfahrens; und

Fig. 2    verschiedene Varianten von Topologien, welche in der Teilchenschwarmoptimierung der Fig. 1 verwendbar sind.

Das erfindungsgemäße Verfahren wird nachfolgend am Beispiel eines technischen Systems in der Form einer Gasturbine beschrieben. Ziel des Verfahrens ist es dabei, in einem entsprechenden Zustand der Gasturbine eine Sequenz von optimalen, in diesem Zustand und in Folgezuständen auszuführenden Aktionen zu bestimmen, wobei zumindest die erste Aktion der Sequenz tatsächlich ausgeführt wird. Ein Zustand ist dabei ein Vektor aus einer Vielzahl von Zustandsvariablen und kann die oben erläuterten Variablen umfassen. Eine Aktion umfasst eine Anzahl von Aktionsvariablen in der Form der Veränderung einer oder mehrerer Zustandsvariablen, die in der Gasturbine verstellt werden können. In dem erfindungsgemäßen Verfahren haben sich z.B. Parameter betreffend die Zuführung von Gas in die Brennkammer der Gasturbine als Zustandsvariablen für praktikabel erwiesen. Entsprechende Aktionen betreffen dabei die Veränderungen dieser Parameter. Die Parameter umfassen insbesondere entsprechende Brennstoffanteile, die an verschiedenen Positionen in die Brennkammer der Gasturbine eingespritzt werden. Diese Anteile können entsprechend verändert werden, wodurch Aktionen generiert werden. In dieser Variante der Erfindung stellen optimale Aktionen solche Aktionen dar, welche langfristig zu einem geringen Brummen in der Brennkammer führen. Gegebenenfalls können die Aktionen auch im Hinblick auf andere bzw. weitere Optimierungskriterien bestimmt werden, wie z.B. möglichst geringe Emissionen an Schadstoffen.

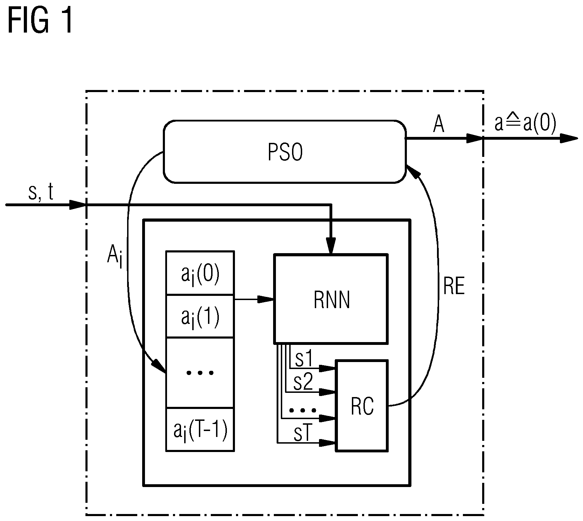

In der hier erläuterten Ausführungsform wird gemäß Fig. 1 ausgehend von einem Zustand s des technischen Systems zu einem aktuellen Zeitpunkt t, gegebenenfalls unter Berücksichtigung von weiteren zurückliegenden Zuständen zu vergangenen Zeitpunkten, eine optimale Aktion a ermittelt, die dann am technischen System durchgeführt wird. Zur Bestimmung der Aktion a wird ein nicht-konvexes heuristisches Optimierungsverfahren in der Form einer Teilchenschwarmoptimierung verwendet, welche in Fig. 1 mit PSO bezeichnet ist. Die Teilchenschwarmoptimierung ist dabei ein an sich bekanntes Verfahren und die genaue Durchführung des Verfahrens in der Ausführungsform der Fig. 1 wird weiter unten näher erläutert.

Ferner wird zur Bestimmung der Aktion a ein rekurrentes neuronales Netz eingesetzt, das in Fig. 1 mit RNN bezeichnet ist. Dabei können an sich aus dem Stand der Technik bekannte rekurrente neuronale Netze verwendet werden, wie z.B. das in der Druckschrift [3] beschriebene neuronale Netz (sog. MPEN-Netz). Das neuronale Netz RNN stellt eine Ausführungsform eines Simulationsmodells im Sinne von Anspruch 1 dar und dient dazu, für eine jeweilige Aktionssequenz, welche mehrere aufeinander folgend am technischen System durchzuführende Aktionen spezifiziert, die daraus resultierenden Folgezustände zu prädizieren. Das Verfahren der Fig. 1 beinhaltet darüber hinaus die Berechnung eines Gütemaßes RE, was in Fig. 1 durch den Schritt RC angedeutet ist (RC = Reward Calculator).

Gemäß der Ausführungsform der Fig. 1 verwendet die Teilchenschwarmoptimierung PSO das rekurrente neuronale Netz RNN dazu, um Zustände für eine in der Teilchenschwarmoptimierung verarbeitete Aktionssequenz zu prädizieren. Für die prädizierten Zustände wird anschließend das Gütemaß RE berechnet. Wie weiter unten näher beschrieben wird, verarbeitet die Teilchenschwarmoptimierung eine Vielzahl von Teilchen, die gemäß Fig. 1 mit dem Index i spezifiziert sind. Jedem Teilchen ist dabei eine Aktionssequenz $A_i$ zugeordnet, welche die ausgehend von dem Zustand s zum aktuellen Zeitpunkt aufeinander folgend auszuführenden Aktionen $a_i(0)$, $a_i(1)$, ..., $a_i(T-1)$ umfasst. Mit anderen Worten wird ein Ereignishorizont von T Zeitschritten in die Zukunft ausgehend vom aktuellen Zeitpunkt betrachtet. Die Teilchenschwarmoptimierung läuft iterativ ab, wobei in jedem Iterationsschritt für jedes Teilchen eine entsprechende Aktionssequenz $A_i$ erhalten wird. Zu Beginn der Teilchenschwarmoptimierung werden die einzelnen Aktionssequenzen zufällig initialisiert.

Die Aktionssequenz jedes Teilchens fließt in der Form entsprechender Eingangsknoten in das rekurrente neuronale Netz RNN ein, welches unter Verwendung einer geeigneten versteckten Schicht dann die aus den ausgeführten Aktionen $a_i(0)$, $a_i(1)$, ... usw. resultierenden Folgezustände s1, s2, ..., sT in der Form von Knoten einer Ausgangsschicht ermittelt. Der Zustand s1 ist der Zustand des technischen Systems nach Anwenden der Aktion $a_i(0)$, auf den Zustand s, der Zustand s2 ist der Zustand des technischen Systems nach Anwenden der Aktion $a_i(1)$ auf den Zustand s1 usw. Schließlich entspricht der Zustand sT dem Zustand des technischen Systems, der sich durch Anwenden der Aktion $a_i(T-1)$ auf den Zustand s(T-1) ergibt.

Die Teilchenschwarmoptimierung optimiert die Aktionssequenzen $A_i$ der einzelnen Teilchen. Jede Aktionssequenz stellt einen $n_x = I \times T$ dimensionalen Vektor dar. T entspricht dem bereits oben erwähnten Ereignishorizont und I stellt die Anzahl der Aktionsvariablen für eine jeweilige Aktion $a_i(0)$, $a_i(2)$, ..., $a_i(T-1)$ dar. Der Suchraum der Teilchenschwarmoptimierung ist somit ein Unterraum von $\mathbb{R}^{I \times T}$ ($\mathbb{R}$ = Raum der reellen Zahlen). Das Ziel der Teilchenschwarmoptimierung ist das Auffinden einer Aktionssequenz mit dem größten Gütemaß RE, wobei dieses Gütemaß als Fitnessfunktion $f$ der Teilchenschwarmoptimierung verwendet wird. Die Fitness $f(s,A_i)$ für das Teilchen i mit der zugeord-

neten Aktionssequenz $A_i$ ist dabei wie folgt gegeben:

$$f : S \times \mathbb{R}^{I \times T} \to \mathbb{R},$$

$$f(s, A_i) \equiv RE = \sum_{k=1}^{T} \gamma^{k-1} r(sk) . \qquad (1)$$

S bezeichnet den Raum aller Zustände, die das technische System einnehmen kann. Die Größe $r(sk)$ stellt ein geeignet definiertes Bewertungsmaß (auch als Reward bezeichnet) für einen jeweiligen, über das neuronale Netz prädizierten Zustand sk dar, und die diskontierte gewichtete Summe aller Bewertungsmaße der Aktionssequenz $A_i$ ist das Gütemaß RE. Der Diskontierungsfaktor $\gamma$ wird mit größerem Abstand zum aktuellen Zeitpunkt t immer kleiner, so dass Bewertungsmaße, welche weiter in der Zukunft liegen, mit geringerem Gewicht in das Gütemaß einfließen. Das Bewertungsmaß wird gemäß dem gewünschten Optimierungskriterium für den Betrieb des technischen Systems festgelegt. Spezifikationen entsprechender Bewertungsmaße sind dem Fachmann hinlänglich bekannt bzw. liegen im Rahmen von fachmännischem Handeln.

In einer bevorzugten Ausführungsform wird ein von dem Ereignishorizont T abhängiger Faktor $\gamma$ in der obigen Gleichung (1) verwendet, der wie folgt definiert ist:

$$\gamma = q^{1/(T-1)}, T > 1 . \qquad (2)$$

Dabei ist $q$ ein fester Wert mit $0 < q \leq 1$. Dadurch fließt das Bewertungsmaß $r(s1)$, d.h. das Bewertungsmaß für die erste Aktion, voll in das Gütemaß RE ein, während das Bewertungsmaß für den am weitesten in der Zukunft gelegenen Zustand $r(sT)$ mit dem Faktor q diskontiert wird. Die Erfinder habend den Wert q=5%=0,05 verwendet.

Im Rahmen der Teilchenschwarmoptimierung wird iterativ basierend auf einer vorgegebenen Anzahl von Iterationsschritten, welche weiter unten mit dem Index m spezifiziert werden, für jedes Teilchen i über iterativ aktualisierte Geschwindigkeitsvektoren eine Aktionssequenz $A_i$ ermittelt, für die dann über das rekurrente neuronale Netz RNN und über die Berechnung RC das Gütemaß RE ermittelt wird, welches als Fitness in die Teilchenschwarmoptimierung einfließt und zur Berechnung des Geschwindigkeitsvektors und damit der Aktionssequenz der jeweiligen Teilchen für den nächsten Iterationsschritt führt. Nach Durchlaufen aller Iterationen wird durch die Teilchenschwarmoptimierung eine optimale Aktionssequenz ausgegeben, welche in Fig. 1 mit A bezeichnet ist. In der hier beschriebenen Ausführungsform wird die erste Aktion a = a(0) dieser optimalen Aktionssequenz A am technischen System ausgeführt. Dies führt im technischen System zu einem neuen Zustand s zum neuen aktuellen Zeitpunkt t. Dieser Zustand wird dann wiederum basierend auf dem Verfahren der Fig. 1 verarbeitet, um hierdurch die nächste Aktion zu ermitteln, die am technischen System ausgeführt wird.

Das Verfahren der Fig. 1 kann in kurzer Rechenzeit von 5 sec oder weniger eine geeignete auszuführende Aktion ausgeben. Von den Erfindern durchgeführte Simulationen haben dabei gezeigt, dass die berechneten Aktionen zu hohen Gütemaßen und damit zu einer guten Erfüllung des über das Gütemaß spezifizierten Optimierungskriteriums führen. Dabei ist von Vorteil, dass auf einfache Weise das Gütemaß bzw. dessen Berechnung verändert werden kann. In einer besonders bevorzugten Ausführungsform kann bei Einsatz des Verfahrens der Fig. 1 auch eine Benutzerschnittstelle am technischen System vorgesehen sein, mit der ein Benutzer on-line bei Veränderung von Betriebsbedingungen des technischen Systems das Gütemaß entsprechend anpassen kann.

Nachfolgend werden bevorzugte Varianten der in Fig. 1 verwendeten Teilchenschwarmoptimierung PSO beschrieben. Allgemein ist der Algorithmus der Teilchenschwarmoptimierung eine populations-basierte, nicht-konvexe, stochastische Optimierungsheuristik. Dabei wird eine Vielzahl von Teilchen eines Teilchenschwarms betrachtet, wobei ein jeweiliges Teilchen eine mögliche Lösung des betrachteten Problems darstellt. In der hier beschriebenen Ausführungsform ist jedem Teilchen eine potentielle Lösung in der Form einer zu ermittelnden optimalen Aktionssequenz $A_i$ zugeordnet. Die Teilchen fliegen iterativ durch einen mehrdimensionalen Suchraum, der auch als Fitness-Landschaft bezeichnet wird. Nach jeder Bewegung erhält jedes Teilchen einen Fitnesswert für seine neue Position, der mit seinem vorhergehenden besten Fitnesswert verglichen wird. Der in der Teilchenschwarmoptimierung verwendete Fitnesswert wurde bereits oben definiert. Die Position eines Teilchens entspricht dabei der im entsprechenden Iterationsschritt bestimmten Aktionssequenz $A_i$.

Als Ergebnis der Teilchenschwarmoptimierung wird die Position (und damit die Aktionssequenz) mit der besten Fitness ausgegeben, die jemals von einem Teilchen in seiner Nachbarschaft gefunden wurde. Die Nachbarschaft ist dabei in geeigneter Weise über eine Topologie festgelegt und spezifiziert für ein jeweiliges Teilchen entsprechende Nachbarteilchen. Die Position, an der ein Teilchen den höchsten Fitnesswert erhält, wird als beste (eigene) Position des Teilchens bezeichnet. Demgegenüber wird die Position, an der ein beliebiges Teilchen in der Nachbarschaft eines jeweiligen Teilchens inklusive des jeweiligen Teilchens selbst den höchsten Fitnesswert erhält, als die beste Nachbarschaftsposition bezeichnet.

Jedes Teilchen wird eindeutig durch einen Index i identifiziert, der für einen Schwarm aus N Teilchen von i=1 bis i=N läuft. Dabei bezeichnet $\mathbf{x}_i(m)$ die Position des Teilchens i und damit die entsprechende Aktionssequenz $A_\mathbf{i}$ zum Iterationsschritt m, wobei in der Teilchenschwarmoptimierung eine vorbestimmte Anzahl von Iterationsschritten durchgeführt wird. Die beste eigene Position eines jeweiligen Teilchens wird in dem Algorithmus zum Iterationsschritt m wie folgt berechnet:

$$\mathbf{y}_i(m) = \begin{cases} \mathbf{y}_i(m-1), & falls\ f(\mathbf{x}_i(m)) \le f(\mathbf{y}_i(m-1)) \\ \mathbf{x}_i(m), & falls\ f(\mathbf{x}_i(m)) > f(\mathbf{y}_i(m-1)) \end{cases}. \qquad (3)$$

Dabei ist $f: \mathbb{R}^{n_x} \to \mathbb{R}$ die bereits oben definierte Fitnessfunktion für den $n_x$-dimensionalen Suchraum, wobei der Zustand s des technischen Systems zum aktuellen Zeitpunkt vorgegeben ist. Die Größe $\mathbf{y}_i(m)$ entspricht einer Aktionssequenz $A_\mathbf{i}$ aus Fig. 1. Beim Start der Teilchenschwarmoptimierung wird die Position eines jeden Teilchens zufällig festgelegt und ist zugleich auch die beste eigene Position.

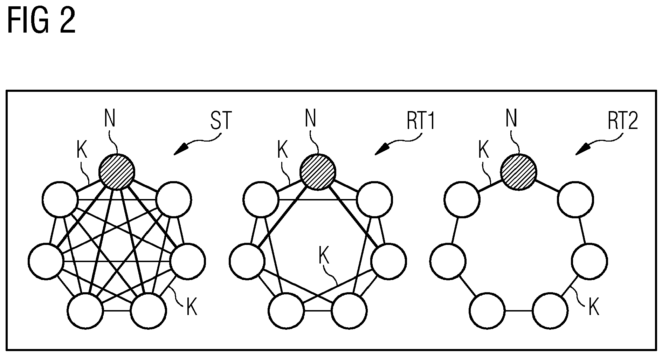

Gemäß der oben genannten Topologie einer Nachbarschaft stellen die Teilchen Knoten dar, die über Kanten miteinander verbunden sind, wobei die Nachbarschaft eines jeweiligen Teilchens das Teilchen selbst beinhaltet sowie alle anderen Teilchen, die direkt über eine Kante mit dem jeweiligen Teilchen verbunden sind. Die Topologie kann dabei auf verschiedene Weise definiert sein. Fig. 2 zeigt verschiedene Varianten von in der Teilchenschwarmoptimierung verwendbaren Topologien am Beispiel eines Teilchenschwarms mit 7 Teilchen. Dabei sind eine Sterntopologie ST sowie zwei Varianten einer Ringtopologie RT1 und RT2 gezeigt. Die einzelnen Teilchen entsprechen dabei jeweiligen Knoten, die als Kreis angedeutet sind, wobei beispielhaft die Nachbarschaft des N-ten Teilchens hervorgehoben ist. Die Knoten sind über Kanten K miteinander verbunden, wobei aus Übersichtlichkeitsgründen in jeder Topologie nur zwei Kanten mit dem Bezugszeichen K bezeichnet ist. Alle Knoten, die mit einem entsprechenden Teilchen direkt über eine Kante K verbunden sind, stellen Nachbarschaftsteilchen des entsprechenden Teilchens dar. Gemäß der Sterntopologie ist dabei jedes Teilchen mit jedem anderen Teilchen verbunden, wohingegen in der Ringtopologie RT1 ein jeweiliges Teilchen vier Nachbarschaftsteilchen aufweist und in der Ringtopologie RT2 ein jeweiliges Teilchen nur zwei Nachbarschaftsteilchen aufweist. Gegebenenfalls können in der Teilchenschwarmoptimierung gemäß Fig. 1 auch kompliziertere Topologien verwendet werden.

Die Nachbarschaft des Teilchens i ist gemäß obiger Beschreibung definiert als:
$N_i = \{i\} \cup \{k|$ Teilchen $i$ und Teilchen $k$ sind über eine Kante der Topologie verbunden$\}$.

Im Rahmen der Teilchenschwarmoptimierung kommunizieren die Teilchen ihre eigenen besten Positionen an alle Teilchen in ihrer Nachbarschaft. Daraus bestimmt jedes Teilchen die beste Nachbarschaftsposition wie folgt:

$$\hat{\mathbf{y}}_\mathbf{i}(m+1) = \underset{\mathbf{x} \in \{\mathbf{y}_j(m)|j \in N_i\}}{\arg\max} f(\mathbf{x}). \qquad (4)$$

Anschließend bestimmen die Teilchen ihre Positionsaktualisierung basierend auf der weiter unten beschriebenen Geschwindigkeit und bewegen sich entsprechend dieser Positionsaktualisierung. Die Geschwindigkeit für den nächsten Iterationsschritt wird dann als ein stochastischer Kompromiss zwischen der besten (eigenen) Position des jeweiligen Teilchens und der besten Nachbarschaftsposition ermittelt.

Die Änderung der Position für jeden Iterationsschritt wird durch Addition eines Geschwindigkeitsvektors $\mathbf{v}_i(m)$ zu der Position des jeweiligen Teilchens durchgeführt, und zwar basierend auf folgender Gleichung:

$$\mathbf{x}_i(m+1) = \mathbf{x}_i(m) + \mathbf{v}'_i(m+1),\ mit$$
$$v_{ij}(m+1) = wv'_{ij}(m) + c_1 r_{1j}(m)\left[y_{ij}(m) - x_{ij}(m)\right] + c_2 r_{2j}(m)\left[\hat{y}_j(m) - x_{ij}(m)\right] \qquad (5)$$

Dabei wird das Verfahren mit jeweiligen Teilchenpositionen $\mathbf{x}_i(0)$ initialisiert, welche gleichverteilt zwischen vorab festgelegten Grenzen $\mathbf{x}_{min}$ und $\mathbf{x}_{max}$ liegen, d.h. es gilt $\mathbf{x}_i(0) \sim U(\mathbf{x}_{min}, \mathbf{x}_{max})$.

Der Geschwindigkeitsvektor $\mathbf{v}_i(m)$ enthält sowohl eine kognitive Komponente als auch eine soziale Komponente und treibt den Optimierungsprozess des Algorithmus an. Dabei stellt $v_{ij}(m)$ die Geschwindigkeit des Teilchens i in der

Dimension $j=1,...,n_x$ zum Iterationsschritt m dar, wobei j den Index der Aktionsvariablen über alle Aktionen der Aktionssequenz (und damit des Ereignishorizonts T) repräsentiert. Die Variable $x_{ij}(m)$ ist die Position des Teilchens i in der Dimension j zum Iterationsschritt m und entspricht somit dem Wert einer Aktionsvariablen der Aktionssequenz. Die Größen $c_1$ und $c_2$ sind positive Beschleunigungskonstanten, die zur Skalierung des Beitrags der kognitiven und der sozialen Komponente verwendet werden. Beispielsweise kann $c_1 = c_2 = 1,49618$ verwendet werden. Die Variablen $r_{1j}(m), r_{2j}(m) \sim U(0,1)$ sind Zufallswerte im Bereich [0, 1], die aus einer Gleichverteilung entnommen werden, um in dem Algorithmus ein stochastisches Element einzuführen.

Der konstante Faktor w aus Gleichung (5) stellt ein Trägheitsgewicht (englisch: inertia weight) dar (siehe auch Druckschrift [5]). Dieses Trägheitsgewicht w steuert, wieviel Gedächtnis von der Geschwindigkeit der vorhergehenden Iteration die neue Geschwindigkeit beeinflussen soll. Der Faktor w wird üblicher Weise mit einem festen Wert aus dem Bereich [0,1] belegt. In einer besonders bevorzugten Variante wird $w = 0,7298$ gewählt. Eine Teilchenscharmoptimierung mit $w = 1$ kann auch als eine Teilchenscharmoptimierung ohne Trägheitsgewicht aufgefasst werden.

Zudem wird ein "Velocity Clamping" verwendet (siehe auch Druckschrift [4]). Dabei wird die Geschwindigkeit an einem spezifischen Maximalwert $V_{max,j}$ in der Dimension j abgeschnitten. Mit anderen Worten wird die Geschwindigkeit des Teilchens i wie folgt angepasst:

$$v'_{ij}(m+1) = \begin{cases} V_{max,j}, & falls & v_{ij}(m+1) > V_{max,j} \\ v_{ij}(m+1), & falls & -V_{max,j} \le v_{ij}(m+1) \le V_{max,j}, \\ -V_{max,j}, & falls & v_{ij}(m+1) < -V_{max,j} \end{cases}. \qquad (6)$$

Vorzugsweise wird der Maximalwert $V_{max,j}$ derart festgelegt, dass er 10% des zur Verfügung stehenden Gesamtbereichs der Positionsschwankung der entsprechenden Dimension j beträgt, d.h. es gilt:

$$V_{max,j} = \{x_{max\,j} - x_{min\,j}\}/10. \qquad (7)$$

Ggf. kann die Teicheschwarmoptimierung auch ohne Velocity Clamping durchgeführt werden. In diesem Fall gilt:

$$v'_{ij}(m) = v_{ij}(m) \qquad (8)$$

Für den Algorithmus der Teilchenschwarmoptimierung ist in der hier beschriebenen Ausführungsform eine vorbestimmte Anzahl von Iterationen vorgegeben. Wird diese Anzahl erreicht, wird als Ergebnis aus den besten Nachbarschaftspositionen aller Teilchen diejenige beste Nachbarschaftsposition mit der größten Fitness ausgegeben. Diese entspricht der Aktionssequenz A gemäß Fig. 1.

Die obige Ausführungsform des erfindungsgemäßen Verfahrens wurde von den Erfindern anhand der Regelung einer Gasturbine getestet. Dabei wurde die so oben beschriebene Teilchenschwarmoptimierung mit den zwei Modifikationen verwendet. Mit entsprechenden Aktionen wurden zwei Stellgrößen der Gasturbine verändert. Das Gütemaß wurde im Hinblick auf geringes Brennkammerbrummen und geringe Schadstoffemissionen der Turbine definiert. Als Ereignishorizont der Aktionssequenzen wurden 30 Schritte in die Zukunft betrachtet. Es wurden für die Teilchenschwarmoptimierung unter anderem 20 Iterationsschritte und eine Schwarmgröße von 50 Teilchen betrachtet. Ferner wurde die Nachbarschaft basierend auf einer Ringtopologie mit vier Nachbarn festgelegt. Als rekurrentes neuronales Netz wurde das in der Druckschrift [3] beschriebene neuronale Netz zur Modellierung des dynamischen Verhaltens eines technischen Systems eingesetzt. Im Rahmen des Tests des Verfahrens konnte nachgewiesen werden, dass die erfindungsgemäße Regelung bzw. Steuerung sehr gut Aktionen mit hohen Gütemaßen und in angemessener Rechenzeit bestimmt.

Die im Vorangegangenen beschriebenen Ausführungsformen des erfindungsgemäßen Verfahrens weisen eine Reihe von Vorteilen auf. Insbesondere kann mit dem rechnergestützten Verfahren in angemessener Rechenzeit die Regelung bzw. Steuerung eines technischen Systems im Hinblick auf ein beliebiges Optimierungskriterium erreicht werden. Dabei kann das Optimierungskriterium in einfacher Weise durch Veränderung des hierfür definierten Gütemaßes angepasst werden, denn das Gütemaß wird nicht bereits vorab im Rahmen eines Lernvorgangs verwendet, wie dies beispielsweise beim Lernen einer Aktionsauswahlregel basierend auf einem neuronalen Netz der Fall ist. Demzufolge kann das Gütemaß im Realbetrieb des technischen Systems problemlos variiert werden.

**EP 3 022 611 B1**

Literaturverzeichnis:

[1] DE 10 2007 001 025 A1

[2] DE 10 2008 020 379 A1

[3] DE 10 2010 011 221 A1

[4] D. P. Rini, S. M. Shamsuddin, S. S. Yuhaniz, "Particle Swarm Optimization: Technique, System and Challenges", International Journal of Computer Applications (0975-8887), Volume 14, No. 1, Januar 2011

[5] Y. Shi, R. Eberhart "A Modified Particle Swarm Optimizer", Proceedings of the IEEE Congress on Evolutionary Computation, Seiten 69 bis 73, Mai 1998

**Patentansprüche**

1. Verfahren zur rechnergestützten Steuerung und/oder Regelung eines technischen Systems, insbesondere einer Energieerzeugungsanlage, bei dem das dynamische Verhalten des technischen Systems für mehrere Zeitpunkte jeweils durch einen Zustand (s) des technischen Systems und eine in diesem Zustand am technischen System durchgeführte Aktion (a) charakterisiert wird, wobei eine jeweilige Aktion (a) zu einem jeweiligen Zeitpunkt in einen neuen Zustand (s) des technischen Systems zum nächsten Zeitpunkt führt und eine Aktionssequenz (A) eine oder mehrere aufeinander folgend in einer zeitlichen Reihenfolge am technischen System durchzuführende Aktionen (a) darstellt, wobei für jede Aktionssequenz (A) basierend auf den Zuständen (s1, s2, ..., sT) des technischen Systems, welche aus dem Durchführen der Aktionen (a) der Aktionssequenz (A) resultieren, ein Gütemaß (RE) in Bezug auf ein Optimierungskriterium des Betriebs des technischen Systems berechnet werden kann, wobei das Gütemaß (RE) umso höher ist, je besser das Optimierungskriterium erfüllt ist, bei dem:

   a) ein Simulationsmodell (RNN) des technischen Systems bereitgestellt wird, mit dem für jeweilige Aktionssequenzen (A) die daraus resultierenden Zustände (s1, s2, ...sT) des technischen Systems prädiziert werden können;
   b) zu einem jeweiligen vorgegebenen Zeitpunkt (t) aus einer Folge von aufeinander folgenden vorgegebenen Zeitpunkten mittels eines numerischen Optimierungsverfahrens (PSO) eine Aktionssequenz (A) mit einem möglichst hohen Gütemaß ermittelt wird, wobei das numerische Optimierungsverfahren das Simulationsmodell (RNN) verwendet, um für Aktionssequenzen ($A_i$), die im Rahmen des numerischen Optimierungsverfahren (PSO) erzeugt werden, die daraus resultierenden Zustände (s1, s2, ..., sT) zu prädizieren und anschließend mit diesen prädizierten Zuständen (s1, s2, ..., sT) das Gütemaß der erzeugten Aktionssequenzen ($A_i$) zu ermitteln, wobei
   das numerische Optimierungsverfahren (PSO) eine Teilchenschwarmoptimierung ist, deren Teilchen jeweiligen Aktionssequenzen ($A_i$) zugeordnet sind, welche bei der Initialisierung der Teilchenschwarmoptimierung (PSO) zufällig bestimmt werden und im Rahmen der Teilchenschwarmoptimierung (PSO) iterativ mittels jeweiliger Geschwindigkeitsvektoren verändert werden, wobei die jeweiligen Geschwindigkeitsvektoren mittels einer Fitnessfunktion bestimmt werden, welche dem Gütemaß (RE) entspricht;
   c) zumindest ein Teil der Aktionen (a) der in Schritt b) ermittelten Aktionssequenz (A) am technischen System durchgeführt wird.

2. Verfahren nach Anspruch 1, bei dem in Schritt c) nur die erste Aktion (a(0)) der in Schritt b) ermittelten Aktionssequenz (A) gemäß ihrer zeitlichen Reihenfolge durchgeführt wird oder mehrere der aufeinander folgenden Aktionen (a) beginnend mit der ersten Aktion (a(0)) der in Schritt b) ermittelten Aktionssequenz (A) durchgeführt werden.

3. Verfahren nach Anspruch 1 oder 2, bei dem bei der Regelung und/oder Steuerung des technischen Systems eine Benutzerschnittstelle vorgesehen ist, über welche ein Benutzer das Gütemaß (RE) verändern kann.

4. Verfahren nach einem der vorhergehenden Ansprüche, bei dem das Simulationsmodell (RNN) ein datengetriebenes Modell und/oder ein analytisches Modell und/oder ein physikalisches Modell des technischen Systems ist, wobei das datengetriebene Modell insbesondere ein neuronales Netz, vorzugsweise ein rekurrentes neuronales Netz, umfasst, wobei das neuronale Netz basierend auf Trainingsdaten von bekannten Aktionssequenzen (A) mit bekannten daraus resultierenden Zuständen (s1, s2, ..., sT) des technischen Systems gelernt ist.

5. Verfahren nach Anspruch 4, bei dem das datengetriebene Modell auf Gaußschen Prozessen und/oder auf Regressionsbäumen und/oder auf einer Support Vector Regression beruht.

6. Verfahren nach einem der vorhergehenden Ansprüche, bei dem das numerische Optimierungsverfahren (PSO) ein nicht-konvexes heuristisches Optimierungsverfahren und/oder ein gradientenfreies stochastisches Suchverfahren ist.

7. Verfahren nach einem der vorhergehenden Ansprüche, bei dem das numerische Optimierungsverfahren (PSO) eine Teilchenschwarmoptimierung und/oder ein evolutionärer Algorithmus und/oder ein genetischer Algorithmus und/oder Simulated Annealing ist.

8. Verfahren nach einem der vorhergehenden Ansprüche, bei dem das Gütemaß (RE) eine Summe darstellt, deren Summanden jeweils ein Bewertungsmaß umfassen, das für jeden aus einer Aktion (a) der Aktionssequenz (A) resultierenden Zustand (s1, s2, ..., sT) bestimmt wird, wobei das Bewertungsmaß in dem jeweiligen Summanden vorzugsweise mit einem Faktor multipliziert ist, der umso kleiner ist, je näher der Zustand, für den das Bewertungsmaß bestimmt wird, am Ende der Aktionssequenz liegt.

9. Verfahren nach einem der vorhergehenden Ansprüche, bei dem eine elektrische Energieerzeugungsanlage umfassend eine Gasturbine geregelt und/oder gesteuert wird.

10. Verfahren nach Anspruch 9, bei dem ein Zustand der Gasturbine eine oder mehrere der nachfolgenden Zustandsvariablen umfasst, wobei eine Aktion vorzugsweise eine Veränderung von einer oder mehreren der nachfolgenden Zustandsvariablen betrifft:

- der Verdichterwirkungsgrad der Gasturbine;
- der Turbinenwirkungsgrad der Gasturbine;
- die geregelte Abgastemperatur der Gasturbine;
- die Stellung einer oder mehrerer Leitschaufeln, insbesondere im Verdichter der Gasturbine;
- die Rotationsgeschwindigkeit der Gasturbine;
- eine oder mehrere Drücke und/oder Temperaturen in der Gasturbine, insbesondere die Eintrittstemperatur und/oder der Eintrittsdruck und/oder die Austrittstemperatur und/oder der Austrittsdruck im Verdichter und/oder in der Turbine;
- die Temperatur in der Umgebung, in der die Gasturbine betrieben wird;
- die Luftfeuchtigkeit in der Umgebung, in der die Gasturbine betrieben wird;
- den Luftdruck in der Umgebung, in der die Gasturbine betrieben wird;
- ein oder mehrere Massen- und/oder Volumenströme;
- ein oder mehrere Parameter von einem Kühl- und/oder Hilfssystem und/oder Schmieröl- und/oder Lagersystemen in der Gasturbine, insbesondere die Stellung von einem oder mehreren Ventilen zur Zufuhr von Kühlluft;
- die Leistung der Gasturbine, insbesondere ein prozentualer Leistungswert;
- die Brennstoffgüte der Gasturbine;
- die Schadstoffemission der Gasturbine, insbesondere die Emission von Stickoxiden und/oder Kohlenmonoxid;
- die Temperatur einer oder mehrerer Turbinenschaufeln der Gasturbine;
- die Verbrennungsdynamik der Brennkammer der Gasturbine;
- ein oder mehrere Parameter betreffend die Zuführung von Gas zu der Brennkammer der Gasturbine;
- die Menge an der Gasturbine zugeführtem Gas;
- Lager- und/oder Gehäuseschwingungen in der Gasturbine.

11. Verfahren nach Anspruch 9 oder 10, bei dem das Optimierungskriterium des Betriebs des technischen Systems eine möglichst geringe Schadstoffemission der Gasturbine und/oder eine möglichst geringe Dynamik der Brennkammer der Gasturbine umfasst.

12. Vorrichtung zur rechnergestützten Steuerung und/oder Regelung eines technischen Systems, insbesondere einer elektrischen Energieerzeugungsanlage, wobei die Vorrichtung eine Rechnereinheit umfasst, mit der ein Verfahren nach einem der vorhergehenden Ansprüche durchgeführt wird.

13. Technisches System, umfassend die Vorrichtung gemäß Anspruch 12.

14. Computerprogrammprodukt mit einem auf einem maschinenlesbaren Träger gespeicherten Programmcode zur Durchführung des Verfahrens nach einem der Ansprüche 1 bis 11, wenn der Programmcode auf einem Rechner ausgeführt wird.

**Claims**

1. Method for controlling and/or regulating a technical system, in particular an energy generation installation, in a computer-assisted manner, in which the dynamic behavior of the technical system is respectively characterized for a plurality of times by a state (s) of the technical system and an action (a) carried out on the technical system in this state, a respective action (a) at a respective time resulting in a new state (s) of the technical system at the next time, and an action sequence (A) being one or more actions (a) to be successively carried out on the technical system in a temporal sequence, a measure of quality (RE) with respect to an optimization criterion for operating the technical system being able to be calculated for each action sequence (A) on the basis of the states (s1, s2, ..., sT) of the technical system which result from carrying out the actions (a) in the action sequence (A), the measure of quality (RE) being higher, the better the optimization criterion is satisfied, in which:

   a) a simulation model (RNN) of the technical system is provided and can be used to predict the resulting states (s1, s2, ..., sT) of the technical system for respective action sequences (A);
   b) an action sequence (A) having the highest possible measure of quality is determined at a respective predefined time (t) from a sequence of successive predefined times using a numerical optimization method (PSO), the numerical optimization method using the simulation model (RNN) to predict the resulting states (s1, s2, ..., sT) for action sequences ($A_i$) generated during the numerical optimization method (PSO) and to then determine the measure of quality of the generated action sequences ($A_i$) using these predicted states (s1, s2, ..., sT), wherein the numerical optimization method (PSO) is particle swarm optimization, the particles of which are assigned to respective action sequences ($A_i$) which are randomly determined when initializing the particle swarm optimization (PSO) and are iteratively changed during the particle swarm optimization (PSO) by means of respective speed vectors, the respective speed vectors being determined using a fitness function which corresponds to the measure of quality (RE);
   c) at least some of the actions (a) in the action sequence (A) determined in step b) are carried out on the technical system.

2. Method according to Claim 1, in which, in step c), only the first action (a(0)) in the action sequence (A) determined in step b) is carried out according to its temporal sequence or a plurality of the successive actions (a) are carried out beginning with the first action (a(0)) in the action sequence (A) determined in step b).

3. Method according to Claim 1 or 2, in which a user interface is provided when regulating and/or controlling the technical system and can be used by a user to change the measure of quality (RE).

4. Method according to one of the preceding claims, in which the simulation model (RNN) is a data-driven model and/or an analytical model and/or a physical model of the technical system, the data-driven model comprising, in particular, a neural network, preferably a recurrent neural network, the neural network being trained on the basis of training data from known action sequences (A) having known resulting states (s1, s2, ..., sT) of the technical system.

5. Method according to Claim 4, in which the data-driven model is based on Gaussian processes and/or regression trees and/or support vector regression.

6. Method according to one of the preceding claims, in which the numerical optimization method (PSO) is a non-convex heuristic optimization method and/or a gradient-free stochastic search method.

7. Method according to one of the preceding claims, in which the numerical optimization method (PSO) is particle swarm optimization and/or an evolutionary algorithm and/or a genetic algorithm and/or simulated annealing.

8. Method according to one of the preceding claims, in which the measure of quality (RE) is a sum, the summands of which each comprise an assessment measure which is determined for each state (s1, s2, ..., sT) resulting from an action (a) in the action sequence (A), the assessment measure in the respective summand preferably being multiplied by a factor which is smaller, the closer the state, for which the assessment measure is determined, is to the end of the action sequence.

9. Method according to one of the preceding claims, in which an electrical energy generation installation comprising a gas turbine is regulated and/or controlled.

10. Method according to Claim 9, in which a state of the gas turbine comprises one or more of the following state variables, an action preferably relating to a change of one or more of the following state variables:

- the compressor efficiency of the gas turbine;
- the turbine efficiency of the gas turbine;
- the regulated exhaust gas temperature of the gas turbine;
- the position of one or more guide blades, in particular in the compressor of the gas turbine;
- the rotational speed of the gas turbine;
- one or more pressures and/or temperatures in the gas turbine, in particular the inlet temperature and/or the inlet pressure and/or the outlet temperature and/or the outlet pressure in the compressor and/or in the turbine;
- the temperature in the environment in which the gas turbine is operated;
- the humidity in the environment in which the gas turbine is operated;
- the air pressure in the environment in which the gas turbine is operated;
- one or more mass and/or volumetric flows;
- one or more parameters of a cooling and/or auxiliary system and/or lubricating oil and/or bearing systems in the gas turbine, in particular the position of one or more valves for supplying cooling air;
- the performance of the gas turbine, in particular a percentage performance value;
- the fuel quality of the gas turbine;
- the pollutant emission of the gas turbine, in particular the emission of nitrogen oxides and/or carbon monoxide;
- the temperature of one or more turbine blades of the gas turbine;
- the combustion dynamics of the combustion chamber of the gas turbine;
- one or more parameters relating to the supply of gas to the combustion chamber of the gas turbine;
- the amount of gas supplied to the gas turbine;
- bearing and/or housing vibrations in the gas turbine.

11. Method according to Claim 9 or 10, in which the optimization criterion for operating the technical system comprises the lowest possible pollutant emission of the gas turbine and/or the lowest possible dynamics of the combustion chamber of the gas turbine.

12. Apparatus for controlling and/or regulating a technical system, in particular an electrical energy generation installation, in a computer-assisted manner, the apparatus comprising a computer unit which is used to carry out a method according to one of the preceding claims.

13. Technical system comprising the apparatus according to Claim 12.

14. Computer program product having a program code which is stored on a machine-readable carrier and is intended to carry out the method according to one of Claims 1 to 11 when the program code is executed on a computer.

**Revendications**

1. Procédé de commande et/ou de régulation assistée par ordinateur d'un système technique, notamment d'une installation de production d'énergie, dans lequel le comportement dynamique du système technique est caractérisé à plusieurs moments respectivement par un état (s) du système technique et une action (a) exécutée dans cet état sur le système technique, dans lequel une action (a) respective à un moment respectif conduit dans un nouvel état (s) du système technique au moment suivant et une séquence d'actions (A) représente une ou plusieurs actions (a) à exécuter successivement dans un ordre chronologique sur le système technique, dans lequel, pour chaque séquence d'actions (A), sur la base des états (s1, s2,..., sT) du système technique qui résultent de l'exécution des actions (a) de la séquence d'actions (A), une mesure de qualité (RE) peut être calculée concernant un critère d'optimisation du fonctionnement du système technique, la mesure de qualité (RE) étant d'autant plus élevée que le critère d'optimisation est mieux satisfait, dans lequel :

a) un modèle de simulation (RNN) du système technique est fourni, avec lequel les états (s1, s2, ...ST) du système technique résultant de séquences d'actions (A) respectives peuvent être prédits,

b) à un moment (t) prédéterminé respectif d'une suite de moments prédéterminés consécutifs, une séquence d'actions (A) ayant une mesure de qualité la plus haute possible est déterminée au moyen d'un procédé d'optimisation numérique (PSO), dans lequel le procédé d'optimisation numérique utilise le modèle de simulation (RNN) pour prédire, pour des séquences d'actions ($A_i$) produites dans le cadre du procédé d'optimisation numérique (PSO), les états résultants (s1, S2, .., sT) et déterminer ensuite avec ces états prédits (s1, s2, ..., sT) la mesure de qualité des séquences d'actions produites ($A_i$),

dans lequel le procédé d'optimisation numérique (PSO) est une optimisation par essaim de particules, dont les particules sont affectées à des séquences d'actions respectives ($A_i$), qui sont déterminées aléatoirement lors de l'initialisation de l'optimisation par essaim de particules (PSO) et sont modifiées dans le cadre de l'optimisation par essaim de particules (PSO) de façon itérative au moyen de vecteurs de vitesse respectifs, dans lequel les vecteurs de vitesse sont déterminés au moyen d'une fonction d'aptitude qui correspond à la mesure de qualité (RE), et

c) au moins une partie des actions (a) de la séquence d'actions (A) déterminée à l'étape b) sont exécutées sur le système technique.

2. Procédé selon la revendication 1, dans lequel, à l'étape c), seule la première action (a(0)) de la séquence d'actions (A) déterminée à l'étape b) est exécutée suivant son ordre chronologique ou plusieurs des actions (a) consécutives sont exécutées en commençant par la première action (a(0)) de la séquence d'actions (A) déterminée à l'étape b).

3. Procédé selon la revendication 1 ou 2, dans lequel une interface utilisateur par laquelle un utilisateur peut modifier la mesure de qualité (RE) est prévue dans la régulation et/ou la commande du système technique.

4. Procédé selon l'une des revendications précédentes, dans lequel le modèle de simulation (RNN) est un modèle piloté par des données et/ou un modèle analytique et/ou un modèle physique du système technique, dans lequel le modèle piloté par des données comprend notamment un réseau neuronal, de préférence un réseau neuronal récurrent, le réseau neuronal étant appris sur la base de données d'apprentissage de séquences d'actions (A) connues avec des états résultants connus (s1, s2, ...,sT) du système technique.

5. Procédé selon la revendication 4, dans lequel le modèle piloté par des données repose sur des processus gaussiens et/ou sur des arbres de régression et/ou sur une régression à vecteur de support.

6. Procédé selon l'une des revendications précédentes, dans lequel le procédé d'optimisation numérique (PSO) est un procédé d'optimisation heuristique non convexe et/ou un procédé de recherche stochastique sans gradient.

7. Procédé selon l'une des revendications précédentes, dans lequel le procédé d'optimisation numérique (PSO) est un procédé d'optimisation par essaim de particules et/ou un algorithme évolutionnaire et/ou un algorithme génétique et/ou un recuit simulé.

8. Procédé selon l'une des revendications précédentes, dans lequel la mesure de qualité (RE) représente une somme, dont les opérandes comprennent respectivement une mesure d'évaluation, qui est déterminée pour chaque état (s1, s2, ..., sT) résultant d'une action (a) de la séquence d'actions (A), dans lequel la mesure d'évaluation dans l'opérande respectif est multipliée de préférence par un facteur qui diminue à mesure que l'état pour lequel la mesure d'évaluation est déterminée devient plus proche de la fin de la séquence d'actions.

9. Procédé selon l'une quelconque des revendications précédentes, dans lequel une installation de production d'énergie électrique comprenant une turbine à gaz est régulée et/ou commandée.

10. Procédé selon la revendication 9, dans lequel un état de la turbine à gaz comprend une ou plusieurs des variables d'état suivantes, et dans lequel une action concerne de préférence une modification d'une ou de plusieurs des variables d'état suivantes :

- le rendement du compresseur de la turbine à gaz,
- le rendement de la turbine de la turbine à gaz,
- la température du gaz d'échappement régulée de la turbine à gaz,
- la position d'une ou plusieurs aubes directrices, notamment dans le compresseur de la turbine à gaz,
- la vitesse de rotation de la turbine à gaz,

- une ou plusieurs pressions et/ou températures dans la turbine à gaz, notamment la température d'entrée et/ou la pression d'entrée et/ou la température de sortie et/ou la pression de sortie dans le compresseur et/ou dans la turbine,
- la température de l'environnement dans lequel la turbine à gaz est exploitée,
- l'humidité de l'air dans l'environnement dans lequel la turbine à gaz est exploitée,
- la pression d'air dans l'environnement dans lequel la turbine à gaz est exploitée,
- un ou plusieurs débits massiques et/ou volumiques,
- un ou plusieurs paramètres d'un système de refroidissement et/ou auxiliaire et/ou de systèmes d'huile de lubrification et/ou de palier dans la turbine à gaz, notamment la position d'une ou plusieurs soupapes d'admission d'air de refroidissement,
- la puissance de la turbine à gaz, notamment une valeur de puissance en pourcentage
- la qualité de combustible de la turbine à gaz,
- l'émission de polluants de la turbine à gaz notamment l'émission d'oxydes d'azote et/ou de monoxyde de carbone,
- la température d'une ou plusieurs aubes de turbine de la turbine à gaz,
- la dynamique de combustion de la chambre de combustion de la turbine à gaz,
- un ou plusieurs paramètres concernant l'alimentation de gaz vers la chambre de combustion de la turbine à gaz,
- la quantité de gaz alimenté vers la turbine à gaz,
- les vibrations de palier et/ou de boîtier dans la turbine à gaz.

11. Procédé selon la revendication 9 ou 10, dans lequel le critère d'optimisation du fonctionnement du système technique comprend une émission de polluants la plus faible possible de la turbine à gaz et/ou une dynamique de la chambre de combustion de la turbine à gaz la plus petite possible.

12. Dispositif de commande et/ou de régulation assistée par ordinateur d'un système technique, notamment d'une installation de production d'énergie électrique, dans lequel le dispositif comprend une unité de calcul, avec laquelle un procédé selon l'une des revendications précédentes est exécuté.

13. Système technique comprenant le dispositif selon la revendication 12,

14. Produit de programme informatique comportant un code de programme stocké sur un support lisible par une machine destiné à exécuter le procédé selon l'une des revendications 1 à 11 lorsque le code de programme est exécuté sur un ordinateur.

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007001025 A1
- DE 102008020379 A1
- DE 102010011221 A1

**In der Beschreibung aufgeführte Nicht-Patentliteratur**

- **D. P. RINI ; S. M. SHAMSUDDIN ; S. S. YUHANIZ.** Particle Swarm Optimization: Technique, System and Challenges. *International Journal of Computer Applications,* Januar 2011, vol. 14 (1), 0975-8887
- **Y. SHI ; R. EBERHART.** A Modified Particle Swarm Optimizer. *Proceedings of the IEEE Congress on Evolutionary Computation,* Mai 1998, 69-73